# EUROPÄISCHE PATENTSCHRIFT

(11) **EP 3 003 835 B1**
(45) Veröffentlichungstag und Bekanntmachung des Hinweises auf die Patenterteilung: **04.10.2017**
(21) Anmeldenummer: 14726596.1
(22) Anmeldetag: 26.05.2014
(51) Int. Cl.: B62D 25/16, B62D 35/00, B60R 13/04

(54) **KRAFTFAHRZEUG MIT VON EINEM RADGEHÄUSE AUSGEHENDEN LUFTKANAL**
MOTOR VEHICLE HAVING AN AIR DUCT THAT EXTENDS AWAY FROM A WHEEL HOUSING
VÉHICULE AUTOMOBILE MUNI D'UN CONDUIT D'AIR SORTANT D'UN PASSAGE DE ROUE

(30) Priorität: 28.05.2013 DE 102013209867
(43) Veröffentlichungstag der Anmeldung: 13.04.2016
(73) Patentinhaber: Bayerische Motoren Werke Aktiengesellschaft, 80809 München (DE)
(72) Erfinder: DIETRICH, Tim, 81543 München (DE); HAAS, Thorsten, 85716 Unterschleißheim (DE)
(86) Internationale Anmeldenummer: PCT/EP2014/060869
(87) Internationale Veröffentlichungsnummer: WO 2014/191371

(56) Entgegenhaltungen:
- DE-A1-102010 050 988
- JP-A- S6 223 875
- JP-A- 2001 278 123
- JP-A- 2013 071 462
- JP-U- S 648 480

## Beschreibung

Die Erfindung betrifft ein Kraftfahrzeug, aufweisend einen von einem Radgehäuse ausgehenden Luftkanal. Das Radgehäuse mag insbesondere ein vorderes Radgehäuse sein. Das Kraftfahrzeug mag insbesondere ein Personenkraftfahrzeug sein.

EP 1 762 470 B1 offenbart einen Kraftfahrzeug-Kotflügel, welcher eine Öffnung aufweist, die eine Luftentnahme erlaubt und die außerdem erste Befestigungseinrichtungen aufweist, die fest mit dem Kotflügel verbunden und in der Lage sind, die Befestigung eines Verschlusselements zu erlauben, das die im Kotflügel geformte Öffnung bedeckt, wobei die ersten Befestigungseinrichtungen aus einem Stück mit dem Kotflügel bestehen und mit der Innenseite des Kotflügels vorstehen, wobei die ersten Befestigungseinrichtungen im Wesentlichen zylindrische Zapfen sind. Die ersten Befestigungseinrichtungen können sich am freien Ende von Freisetzungswänden befinden, die sich von der Innenseite des Kotflügels vorspringend befinden. Die Befestigungseinrichtungen können in regelmäßigen Abständen auf dem Umriss der Öffnung positioniert sein. EP 1 762 470 B1 offenbart ferner ein Verfahren zum Erhalt eines Kraftfahrzeug-Kotflügels, bei dem ein Verschlusselement vor eine auf dem Kotflügel geformte Öffnung kommt, wobei das Verschlusselement in einem ersten Schritt auf ersten Befestigungseinrichtungen positioniert wird, die von der Innenseite des Kotflügels vorstehend angeordnet sind, wobei zweite Befestigungseinrichtungen anschließend mit den ersten Befestigungseinrichtungen in Kontakt gebracht werden, indem das Verschlusselement gegen die ersten Befestigungseinrichtungen gepresst wird, wobei die ersten Befestigungseinrichtungen im Wesentlichen zylindrische Zapfen sind. Nachteilig hierbei ist ein hoher Herstellungs- und Montageaufwand, welcher zudem nur bei seitlich deutlich herausstehenden Kotflügeln für eine merkliche Radentlüftung sorgt.

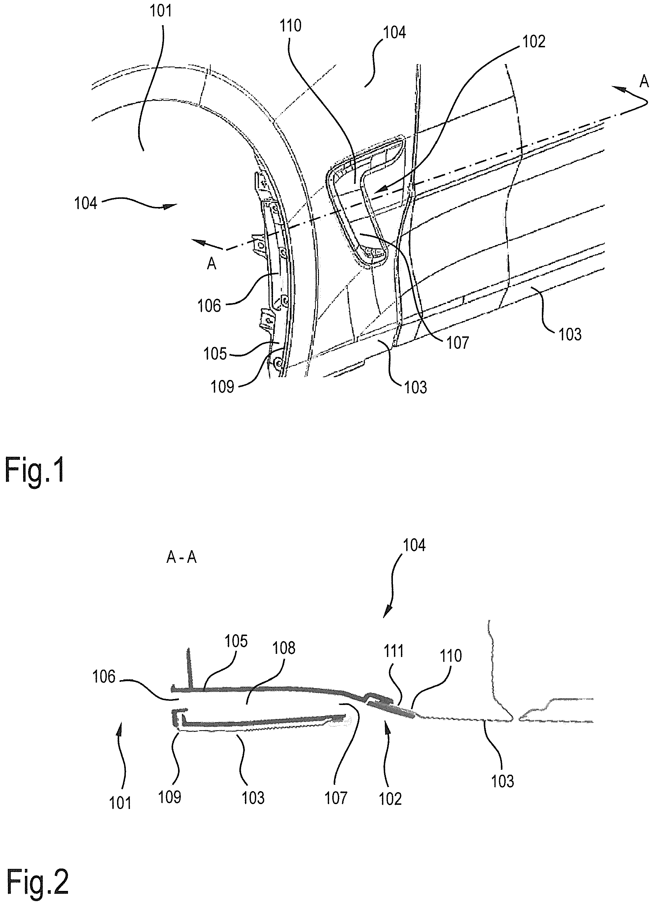

Auch ist eine Radentlüftung bekannt, bei welcher, wie in **Fig.1** in einer Ansicht von schräg oben auf ein vorderes linkes Radgehäuse 101 gezeigt, eine senkrechte schlitzförmige Öffnung 102 in einer Seitenwand 103 eines Personenkraftfahrzeugs 104 vorhanden ist. Wie in **Fig.2** als Schnitt A-A aus Fig.1 gezeigt, schließt sich in Richtung nach Innen (in Bezug auf das Personenkraftfahrzeug 104) an die Öffnung 102 ein zweiseitig offenes Kunststoffbauteil 105 an, das mit einem als Lufteinlassöffnung dienenden offenen Ende 106 in das Radgehäuse 101 und mit seinem anderen, als Luftauslassöffnung dienenden offenen Ende 107 in die Öffnung 102 mündet. Das Kunststoffbauteil 105 stellt dadurch einen Luftkanal 108 zwischen dem vorderen Radgehäuse 101 und der Seitenwand 103 bzw. der darin befindlichen Öffnung 102 bereit. Das Kunststoffbauteil 105 ist an einem vorderen, an das Radgehäuse 101 grenzenden Rand 109 der Seitenwand 103 mit dieser verbunden. Das Kunststoffbauteil 105 ist ferner über eine Blende 110 mit einem hinteren Rand 111 der Seitenwand 103 an der Öffnung 102 verbunden. Auch mit dieser Art von Radentlüftung ist ein hoher Herstellungs- und Montageaufwand

Die JP 62 023875 A offenbart ein gattungsgemäßes Kraftfahrzeug. Es ist die **Aufgabe** der vorliegenden Erfindung, die Nachteile des Standes der Technik zumindest teilweise zu überwinden und insbesondere eine Möglichkeit zur effektiven Radentlüftung mit vergleichsweise einfachen und preiswerten Mitteln bereitzustellen. Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Kraftfahrzeug, aufweisend einen von einem Radgehäuse ausgehenden Luftkanal, wobei der Luftkanal zwischen einer Seitenwand des Kraftfahrzeugs und einer die Seitenwand beabstandet überdeckenden Radlaufabdeckung verläuft. Der von der Radlaufabdeckung dort beabstandet überdeckte Bereich der Seitenwand kann im Folgenden auch als "Luftleitbereich" der Seitenwand bezeichnet werden. Der Luftleitbereich entspricht also demjenigen Bereich der Seitenwand, welcher dem Luftkanal zugehörig ist.

Die Radlaufabdeckung deckt einen äußeren Rand des Radgehäuses abschnittsweise oder vollständig ab. Dieses Kraftfahrzeug weist den Vorteil auf, dass der Luftkanal mit vergleichsweise einfachen und preiswerten Mitteln realisierbar ist. Es braucht keine Öffnung in die Seitenwand eingebracht zu werden, was deren Stabilität praktisch unvermindert erhält. Die Radlaufabdeckung ist ebenfalls bereits vorhanden und mag ohne oder mit nur geringen baulichen Änderungen weiterverwendet werden. Für den Luftkanal wird folglich kein eigenes Bauteil benötigt, was Werkzeug-, Material- und Montagekosten spart.

Der Luftkanal wird also insbesondere durch den Luftleitbereich der Seitenwand und einen den Luftleitbereich überdeckenden Bereich der Radlaufabdeckung gebildet. Ein Lufteinlassbereich des Luftkanals mündet also insbesondere derart in oder an dem Radgehäuse, dass bei Fahrt Luft aus dem Radgehäuse in den Luftkanal gedrückt wird. Der Luftkanal kann ganz oder zumindest abschnittsweise zwischen der Seitenwand des Kraftfahrzeugs und der die Seitenwand beabstandet überdeckenden Radlaufabdeckung verlaufen.

Die Seitenwand mag insbesondere ein Teil einer Karosserie und/oder ein Teil eines Stoßfängers sein.

Es ist eine Ausgestaltung, dass der Luftkanal zumindest abschnittsweise zwischen einer nach innen gerichteten Verprägung der Seitenwand und einer die Verprägung beabstandet überdeckenden Radlaufabdeckung verläuft. In anderen Worten wird der Luftleitbereich zumindest teilweise durch die Verprägung gebildet. Die Verprägung lässt sich mit geringem Aufwand in die Seitenwand einbringen. Der Luftkanal wird also durch die Verprägung und den die Verprägung überdeckenden Bereich der Radlaufabdeckung gebildet. Da die Verprägung nach innen (in Richtung des Fahrzeugs) gerichtet ist, mündet der Luftkanal an einer vergleichsweise weit inneren Stelle in dem Radgehäuse, was eine besonders effektive Entlüftung ermöglicht. Ein weiterer Vorteil ist, dass der Luftkanal unabhängig von einer Form oder einem Vorhandensein eines seitlich vorstehenden Kotflügels bereitgestellt werden kann.

Es ist eine Weiterbildung, dass die Verprägung eine längliche Verprägung ist, welche sich insbesondere in einer Längsrichtung des Fahrzeugs, z.B. von vorne nach hinten, erstreckt. Die Verprägung mag sich dabei auch leicht schräg oder abschnittsweise schräg zu der Längsrichtung des Fahrzeugs erstrecken.

Es ist noch eine Ausgestaltung, dass die längliche Verprägung bzw. der Luftleitbereich der Seitenwand eine in ihrer Längserstreckung zumindest abschnittsweise geradlinige Verprägung ist. Sie mag insbesondere an dem von der Radlaufabdeckung überdeckten Abschnitt geradlinig verlaufen.

Die längliche Verprägung bzw. der Luftleitbereich der Seitenwand mag insbesondere an einem unteren Rand der Seitenwand ansetzen.

Die den Luftleitbereich der Seitenwand bildende längliche Verprägung mag im Querschnitt eine (nach innen gerichtete) Wannenform aufweisen, insbesondere mit einem (entlang der Vertikalen) breiten Boden und oberseitig und unterseitig je einer nach Außen vorstehenden Seitenwand. Die Seitenwand mag gebogen oder gekrümmt sein. Der Boden mag leicht nach außen gewölbt sein.

Es ist noch eine Ausgestaltung, dass eine Höhe der Verprägung geringer ist als eine Höhe des Radkastens. Es ist eine Weiterbildung, dass die Höhe der Verprägung ungefähr einer Hälfte einer Höhe des äußeren Rands des Radkastens beträgt, insbesondere nicht mehr als eine Hälfte der Höhe des Radkastens.

Die Verprägung und der die Verprägung überdeckende Abschnitt der Radlaufabdeckung mögen zum Radkasten oder Radgehäuse hin zumindest im Wesentlichen bündig zueinander angeordnet sein.

Es ist eine Ausgestaltung, dass die Verprägung sich bis hinter die Radlaufabdeckung erstreckt. Dadurch kann auf einfache Weise eine Luftauslassöffnung des Luftkanals (insbesondere in Bezug auf eine Längserstreckung des Fahrzeugs) hinter der Radlaufabdeckung bereitgestellt werden. Es ist dabei eine Weiterbildung, dass die Radlaufabdeckung die Verprägung nur über einen Teil der Länge der Verprägung abdeckt, bevorzugt beginnend an dem Radgehäuse. Der nicht abgedeckte Teil dient dann als Luftauslassöffnung. Der Luftkanal weist also insbesondere eine Länge in Richtung der Luftströmung auf, welche mindestens einer Breite der Radlaufabdeckung entspricht, insbesondere sogar größer ist als die Breite der Radlaufabdeckung.

Die Verprägung mag sich bis einen Türbereich fortsetzen, insbesondere als eine Verprägung einer äußeren Seitenwand einer Tür, z.B. Fahrertür.

Es ist noch eine Ausgestaltung, dass die Radlaufabdeckung in dem Luftleitbereich, insbesondere in der Verprägung, befestigt ist, z.B. durch die Verwendung eines oder mehrerer Befestigungselemente. Dadurch wird der den Luftleitbereich überwölbende Bereich der Radlaufabdeckung mechanisch stabilisiert oder versteift, was insbesondere bei einer dünnen Radlaufabdeckung von Vorteil ist. Beispielsweise kann so einem Flattern der Radlaufabdeckung im Luftleitbereich bei hoher Strömungsgeschwindigkeit der Luft vorgebeugt werden.

Die Radlaufabdeckung mag insbesondere in dem Luftleitbereich, insbesondere in der Verprägung, verrastet sein, z.B. durch Verwendung eines oder mehrerer Rastelemente, beispielsweise Zapfen. Die Zapfen können insbesondere durch ein oder mehrere Löcher in der Seitenwand hindurchgeführt sein.

Die Radlaufabdeckung mag auch außerhalb des Luftleitbereichs an der Seitenwand befestigt sein, insbesondere unmittelbar neben dem Luftleitbereich oder in geringer Nähe zu dem Luftleitbereich, insbesondere oberhalb und/oder unterhalb des Luftleitbereichs. Zur Erreichung einer hohen Steifigkeit im Bereich der Verprägung ist es eine bevorzugte Weiterbildung, dass die Radlaufabdeckung beidseitig des Luftleitbereichs befestigt, insbesondere verrastet, ist.

Es ist eine Weiterbildung, dass die Radlaufabdeckung im Bereich des Luftleitbereichs bzw. an seinem den Luftleitbereich überdeckenden Bereich strukturell versteift ist. Dies kann z.B. durch ein - insbesondere innenseitiges - Vorsehen einer Versteifungsstruktur erreicht werden. Die Versteifungsstruktur mag beispielsweise in der Wand der Radlaufabdeckung vorlaufende Versteifungsrippen oder Versteifungsstreben umfassen. Alternativ oder zusätzlich mag die Versteifungsstruktur innenseitig (d.h., auf der dem Luftleitbereich der Seitenwand zugewandten Seite) vorstehende Versteifungselemente wie mindestens eine Verstrebung aufweisen.

Es ist eine weitere Ausgestaltung, dass die Radlaufabdeckung in den Luftkanal ragende Rippen aufweist. Durch die Rippen können eine Versteifung der Radlaufabdeckung (insbesondere falls die Rippen zusammenhängen), eine Lenkung der Luftströmung und/oder ein Schutz der Seitenwand vor auffliegenden Steinchen ("Steinschlag") usw. erreicht werden. Es ist eine für eine effektive Luftströmung und effektive Schutzfunktion bevorzugte Weiterbildung, dass die Rippen zumindest im Wesentlichen horizontal ausgerichtet sind, insbesondere nur zumindest im Wesentlichen horizontal ausgerichtet sind. Auch wird es aus diesem Grund bevorzugt, dass mehrere Rippen zumindest ungefähr parallel oder kollinear Richtung zueinander verlaufen. Es mag also insbesondere eine Anordnung von Rippen ausgeschlossen sein, welche gitterförmig oder kastenförmig angeordnet sind.

Es wird für eine effektive Luftführung, Versteifung und Schutzfunktion bevorzugt, dass sich die Rippen über zumindest im Wesentlichen die gesamte Breite des Luftkanals erstrecken.

Es ist noch eine weitere Ausgestaltung, dass der Luftleitbereich, insbesondere die Verprägung, zumindest bereichsweise mittels einer Schutzabdeckung abgedeckt ist, welche insbesondere von der Radlaufabdeckung zumindest teilweise außenseitig beabstandet überdeckt sein kann. Die Schutzabdeckung schützt den Luftleitbereich der Seitenwand, insbesondere vor mechanischer Beanspruchung wie Abrieb, Kratzer usw., z.B. durch auffliegende Steinchen usw. Der Luftkanal kann dann insbesondere zwischen oder mittels der Schutzabdeckung und der Radlaufabdeckung gebildet sein. Die Schutzabdeckung mag sich insbesondere eng oder mit einem nur geringen Spalt an den Luftleitbereich anschmiegen, so dass ein Nebenluftstrom zwischen dem Luftleitbereich der Seitenwand und der Schutzabdeckung gering gehalten oder sogar praktisch ganz verhindert wird. Zur Unterdrückung des Nebenluftstroms mag die Schutzabdeckung z.B. an der Lufteinlassöffnung des Luftkanals in Richtung des Luftleitbereichs umgeschlagen sein. Die Schutzabdeckung ist einfach ausgestaltbar und montierbar. Die Schutzabdeckung mag insbesondere an der Seitenwand des Kraftfahrzeugs verrastet oder verklipst sein, z.B. mittels eines oder mehrerer Zapfen. Die Schutzabdeckung mag dabei auch oder nur in dem Luftleitbereich befestigt sein, insbesondere verrastet sein. Bei der Montage mögen also, falls die Schutzabdeckung und die Radlaufabdeckung separate Teile sind, zunächst die Schutzabdeckung und dann die Radlaufabdeckung angebracht werden. Die Schutzabdeckung mag insbesondere (in Erstreckungsrichtung des Luftkanal) schmaler sein als die Radlaufabdeckung, damit sie von der Radlaufabdeckung optisch verdeckt wird. Sie mag aber grundsätzlich z.B. auch eine gleiche Breite aufweisen oder sogar breiter sein als die Radlaufabdeckung.

Es ist ferner eine Ausgestaltung, dass die Schutzabdeckung als ein Schutzabdeckungsbereich in die Radlaufabdeckung integriert ist. Der Luftkanal kann dann zumindest abschnittsweise dort, wo die Radlaufabdeckung den Schutzabdeckungsbereich aufweist, alleine durch die Radlaufabdeckung gebildet werden. Der Schutzabdeckungsbereich mag insbesondere derjenige Bereich der Radlaufabdeckung sein, welcher dem Luftleitbereich der Seitenwand direkt benachbart ist. Diese Ausgestaltung vereinfacht im Vergleich zu der separaten Befestigung der Schutzabdeckung und der Radlaufabdeckung eine Herstellung und Montage. Die Radlaufabdeckung kann weiterhin einfach von außen an der Seitenwand angebracht werden. Ein weiterer Vorteil dieser Ausgestaltung besteht darin, dass der Schutzabdeckungsbereich die Radlaufabdeckung versteift.

Es ist außerdem eine Ausgestaltung, dass der Schutzabdeckungsbereich im Querschnitt zumindest abschnittweise geradlinig ist.

Es ist auch noch eine Ausgestaltung, dass der Schutzabdeckungsbereich an einem in das Radgehäuse gerichteten, geradlinigen vorderen Rand oder Randabschnitt über ein Filmscharnier mit einem Einsatzteil verbunden ist. Das Einsatzteil ist insbesondere um das Filmscharnier in die den Luftkanal verschwenkbar, insbesondere in die Radlaufabdeckung zwischen dem Schutzabdeckungsbereich und dem den Schutzabdeckungsbereich beabstandet überdeckenden Bereich. Dies ermöglicht eine besonders einfache Montage des Einsatzteils. Die Radlaufabdeckung mag insbesondere zunächst mit einem Einsatzteil, das noch nicht eingeschwenkt ist, an der Seitenwand befestigt werden, was eine Montage erleichtern kann. Erst danach wird das Einsatzteil in die Radlaufabdeckung hineinverschwenkt. Das Einsatzteil mag die Radlaufabdeckung noch stärker versteifen.

Es ist auch eine Ausgestaltung, dass das Einsatzteil Streben, insbesondere Rippen, aufweist. Dadurch sind eine noch höhere Versteifung als auch ein Schutz vor hochfliegenden Gegenständen (wie Steinchen, Split usw.) erreichbar. Die Streben mögen insbesondere horizontal oder schräg horizontal verlaufende Streben sein, um einen Luftstrom nicht Wesentlich zu behindern. Die Streben können aerodynamisch wirksam geformt sein, z.B. eine Tragflächenform aufweisen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.3: zeigt in Schrägansicht einen Teil eines Personenkraftwagens im Bereich seines vorderen linken Radgehäuses mit einem Luftkanal zwischen dem Radgehäuse und der Seitenwand gemäß einem ersten Ausführungsbeispiel der Erfindung;
- Fig.4: zeigt den Teil des Personenkraftwagens aus Fig.3 als Schnittdarstellung in Draufsicht;
- Fig.5 bis 8: zeigen als vertikalen Schnitt in Frontalansicht eine Seitenwand eines Personenkraftwagens im Bereich eines Luftkanals zwischen dem Radgehäuse und der Seitenwand gemäß einem zweiten bis fünften Ausführungsbeispiel der Erfindung.

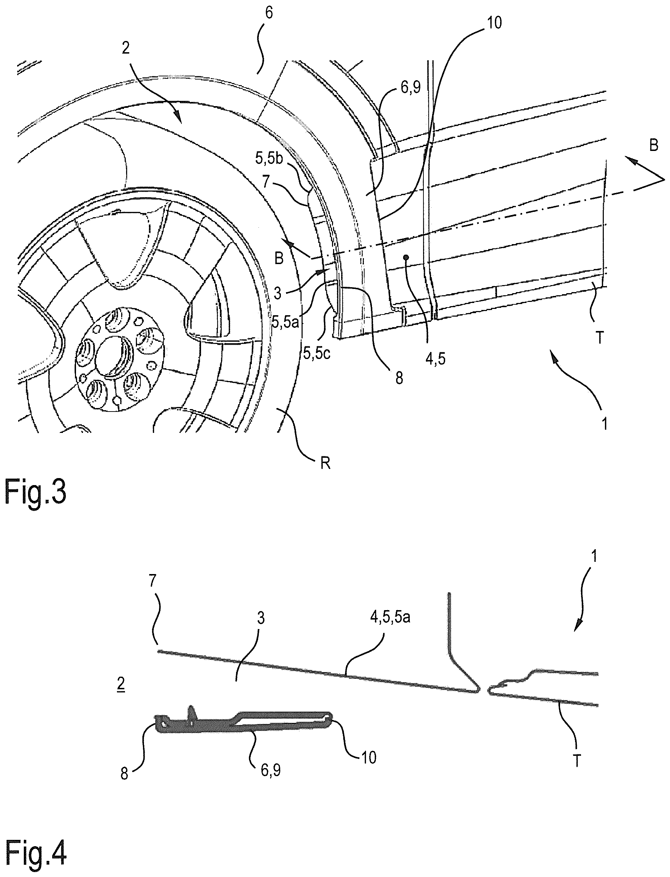

**Fig.3** zeigt in Schrägansicht einen Teil eines Personenkraftwagens 1 im Bereich seines vorderen linken Radgehäuses 2, in welchem ein entsprechendes Rad R vorhanden ist. **Fig.4** zeigt den Teil des Personenkraftwagens 1 als Schnitt B-B aus Fig.3 in Draufsicht.

Zwischen dem Radgehäuse 2 und einer Seitenwand 4 des Personenkraftwagens 1 verläuft ein Luftkanal 3. Der Luftkanal 3 befindet sich zwischen einer nach innen gerichteten Verprägung 5 der Seitenwand 4 und einer die Verprägung 5 teilweise außenseitig beabstandet überdeckenden Radlaufabdeckung 6. Die Radlaufabdeckung 6 deckt hier einen äußeren Rand des Radgehäuses 2 vollständig ab.

Die Verprägung 5 erstreckt sich in Längserstreckung des Personenkraftwagens 1 bis hinter die Radlaufabdeckung 6. In anderen Worten überdeckt die Radlaufabdeckung 6 nur einen Teil oder Abschnitt der Verprägung 5, nämlich denjenigen Abschnitt, welcher direkt an die Radlaufabdeckung 6 anschließt. Folglich kann Luft aus dem Radgehäuse 2 in den Luftkanal 3 einströmen, zwischen der Verprägung und der Radlaufabdeckung 6 durch den Luftkanal 3 nach hinten strömen und an einem hinter der Radlaufabdeckung 6 befindlichen Abschnitt der Seitenwand 4 ausströmen. Die Lufteinlassöffnung wird also insbesondere mittels des vorderen Rands 7 der Verprägung 5 und des vorderen Rands 8 des die Verprägung 5 überdeckenden Abschnitts 9 der Radlaufabdeckung 6 begrenzt. Als Luftauslassöffnung dient insbesondere der hintere Rand 10 der Radlaufabdeckung 6 zusammen mit dem davon überdeckten Teil der Verprägung 5.

Die Verprägung 5 bzw. ist, wie insbesondere aus Fig.4 ersichtlich, eine entlang ihrer zumindest ungefähr horizontalen Längserstreckung geradlinige Verprägung. Sie verläuft bis in einen Bereich einer Seitentür T. Die Verprägung 5 weist ferner die Eigenschaft auf, dass sie an einem unteren Rand U der Seitenwand 4 ansetzt, wie insbesondere aus Fig.3 ersichtlich. Wie ebenfalls aus Fig.3 ersichtlich, weist die Verprägung 5 im Querschnitt eine Wannenform mit einem (entlang der Vertikalen) breiten Boden 5a und oberseitig und unterseitig je einer nach Außen vorstehenden kürzeren Seitenwand 5b und 5c. Die Seitenwände 5b und 5c sind nach außen gekrümmt. Der Boden 5a ist leicht nach außen gewölbt.

Eine Höhe der Verprägung 5 (entlang einer Vertikalen) ist geringer ist als eine Höhe des Radgehäuses 2 und entspricht ungefähr einer Hälfte einer Höhe des äußeren Rands des Radkastens 2.

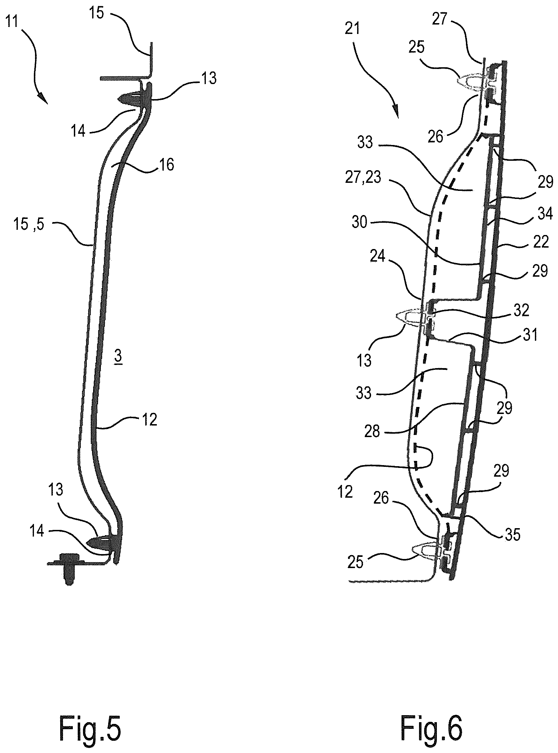

**Fig.5** zeigt eine Seitenwand 15 eines Personenkraftwagens 11 als Schnittdarstellung durch eine Verprägung 5 im Bereich der Radlaufabdeckung in Frontalansicht. Der Personenkraftwagen 11 ist ähnlich aufgebaut wie der Personenkraftwagen 1. Die Radlaufabdeckung, z.B. 6, ist nicht gezeigt, aber grundsätzlich vorhanden. Die Verprägung 5 ist nun bereichsweise mittels einer Schutzabdeckung 12 abgedeckt. Die Schutzabdeckung 12 erstreckt sich in Längsrichtung des Personenkraftwagens 11 (also zumindest ungefähr senkrecht zu der Bildebene) entlang der Verprägung 5. Die Schutzabdeckung 12 besteht hier z.B. aus Kunststoff. Sie setzt bevorzugt an oder in der Nähe des Radgehäuses 2 bzw. des vorderen Rands 7 der Verprägung 5 an und erstreckt sich an der Verprägung 5 nach hinten. Die Schutzabdeckung 12 kann bis vor die Luftauslassöffnung reichen, kann bis zu der Luftauslassöffnung reichen oder kann bis hinter die Luftauslassöffnung reichen. Ihre Ausdehnung entlang der Verprägung 5 ist also grundsätzlich nicht beschränkt, jedoch wird es bevorzugt, dass sie von der Radlaufabdeckung 6 zumindest teilweise außenseitig beabstandet überdeckt ist. Durch die Schutzabdeckung 12 wird die Verprägung 5 vor Steinschlag usw. geschützt.

Die Schutzabdeckung 12 ist an der Seitenwand 15 verrastet, und zwar mittels an der Schutzabdeckung angebrachter Zapfen 13, die durch entsprechende Löcher 14 in der Seitenwand 15 eingeführt sind. Die Zapfen 13 und Löcher 14 befinden sich oberseitig und unterseitig außerhalb der Verprägung 5, um den Strömungsquerschnitt der Luftkanals 3 nicht übermäßig zu verringern. Die Zapfen 13 und Löcher 14 sind dabei unmittelbar oder in geringem Abstand zu der Verprägung 5 positioniert. Die Schutzabdeckung 12 kann auch in der Verprägung 5 befestigt sein, z.B. verrastet, z.B. durch Zapfen.

Zwischen der Schutzabdeckung 12 und der Verprägung 5 mag ein schmaler Spalt 16 vorhanden sein, welcher hier übertrieben breit dargestellt ist. Dieser Spalt 16 mag eine einfache Montage der Schutzabdeckung 12 erleichtern. Zudem wird so verhindert, dass die Schutzabdeckung 12 an der Verprägung 5 scheuert und dadurch z.B. Lackschäden verursacht. Der Spalt 16 ist jedoch bevorzugt nicht so breit, dass er einen signifikanten Luftnebenstrom neben dem Luftkanal 3 führen kann, falls überhaupt. Der Luftkanal 3 wird im Bereich der Schutzabdeckung 12 durch die Schutzabdeckung 12 und den sie überdeckenden Teil der Radlaufabdeckung 6 gebildet. Der Spalt 16 mag z.B. vorderseitig abgedeckt sein, z.B. durch einen umgebogenen laschenartigen Randbereich der Schutzabdeckung 12. Alternativ liegt die Schutzabdeckung 12 zumindest im Wesentlichen spaltfrei auf der Verprägung 5 auf.

**Fig.6** zeigt eine Schnittdarstellung in Frontalansicht durch eine Verprägung 23 im Bereich einer Radlaufabdeckung 22 eines Personenkraftwagens 21. Der Personenkraftwagen 21 ist ähnlich aufgebaut wie der Personenkraftwagen 1. Im Gegensatz zu dem Personenkraftwagen 1 ist die Radlaufabdeckung 22 nun auch in der Verprägung 23 befestigt, und zwar durch mindestens einen Zapfen 13 verrastet. Der mindestens eine Zapfen 13 ist durch mindestens ein entsprechendes Loch 24 in der Verprägung 23 eingeführt. Ansonsten kann die Radlaufabdeckung 22, wie z.B. auch die Radlaufabdeckung 6, mittels Zapfen 25 und Löchern 26 außerhalb der Verprägung 5, insbesondere oberseitig und/oder unterseitig der Verprägung 5, an der Seitenwand 27 verrastet sein. Dadurch wird eine Stabilisierung der Radlaufabdeckung 22 im Bereich der Verprägung 23 erreicht, was z.B. einem dortigen Flattern der Radlaufabdeckung 22 entgegenwirkt.

Die Radlaufabdeckung 22 kann auf ihrer der Verprägung 23 zugewandten (Innen-) Seite eine Versteifungsstruktur 28 aufweisen, die insbesondere mehrere sich in Längsrichtung der Verprägung 23 (senkrecht zur Bildebene) erstreckende Streben 29 aufweist, welche eine innere Abdeckung 30 tragen. Die innere Abdeckung 30 weist eine sich in Richtung der Verprägung 23 erstreckenden topfähnlichen Teilbereich 31 auf, dessen Grund 32 den mindestens einen Zapfen 13 hält. Der Bereich zwischen der inneren Abdeckung 30 und der Verprägung 23 stellt den Luftkanal 33 dar, während der Bereich 34 zwischen der inneren Abdeckung 30 und einer Außenwand 35 der Radlaufabdeckung 22 bevorzugt entweder einen so geringen Querschnitt aufweist, dass dadurch ein nur geringer Nebenluftstrom zu dem Luftkanal 33 geführt wird oder dieser Bereich 34 keinen Luftstrom führen kann, z.B. aufgrund einer insbesondere vorderseitigen Abdeckung.

Wie durch die gestrichelte Linie angedeutet, kann die Radlaufabdeckung 22 eine Schutzabdeckung 12 überdecken. Die Schutzabdeckung 12 mag dazu passend geformt sein, z.B. mit Aussparungen im Bereich der Löcher 26 zur Durchführung der Zapfen 25. Alternativ oder zusätzlich mögen die Zapfen 25 und Löcher 26 der Radlaufabdeckung 22 weiter von der Verprägung 23 entfernt sein als die Schutzabdeckung 12. Der Luftkanal 33 wird dann seitlich durch die Schutzabdeckung 12 und die Radlaufabdeckung 22 begrenzt.

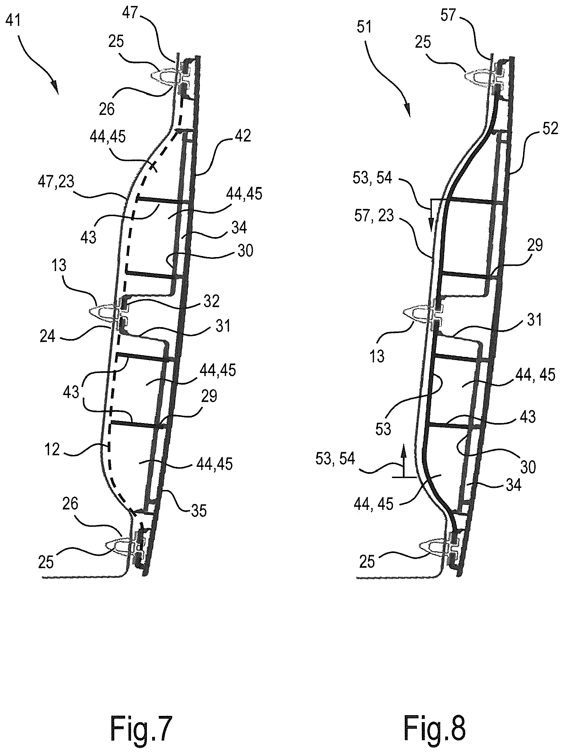

**Fig.7** zeigt eine Schnittdarstellung in Frontalansicht durch eine Verprägung 23 einer Seitenwand 47 im Bereich einer Radlaufabdeckung 42 eines Personenkraftwagens 41. Der Personenkraftwagen 41 ist ähnlich aufgebaut wie der Personenkraftwagen 21. Im Unterschied zu der Radlaufabdeckung 22 weist die Radlaufabdeckung 42 nun in Richtung der Verprägung 23 ragende Rippen 43 auf, welche zumindest ungefähr entlang der Verprägung 23 horizontal oder schräg gegen die Horizontale geneigt ("schräg horizontale") verlaufen. Schräg horizontale Rippen können insbesondere einen Neigungswinkel von 45° oder weniger, insbesondere von 30° oder weniger, insbesondere von 15° oder weniger, gegen die Horizontale aufweisen.

Die Rippen 43 können insbesondere auf der Schutzabdeckung 12 aufsitzen, falls diese vorhanden ist. Falls keine Schutzabdeckung 12 vorhanden ist, mögen die Rippen 43 insbesondere auf der Verprägung 23 aufsetzen. Die Rippen 43 verringern eine Verwirbelung des Luftstroms in dem Luftkanal 44 bzw. in dessen durch die Rippen 43 abgetrennten Teilbereichen 45. Zudem wirken die Rippen 43 als zusätzliche Prallwände für Steinschlag bzw. aufgewirbelte Steinchen usw. Allgemein können die Rippen aber z.B. auch schräg stehen.

**Fig.8** zeigt eine Schnittdarstellung in Frontalansicht durch eine Verprägung 23 einer Seitenwand 57 im Bereich einer Radlaufabdeckung 52 eines Personenkraftwagens 51. Der Personenkraftwagen 51 ist ähnlich aufgebaut wie der Personenkraftwagen 41 mit der

Schutzabdeckung 12. Allerdings sind die Schutzabdeckung und die Radlaufabdeckung nun nicht mehr separat hergestellte und an der Seitenwand 57 montierte Bauteile, sondern sind ein einziges Bauteil. Die Schutzabdeckung ist also in anderen Worten als ein Schutzabdeckungsbereich 53 in die Radlaufabdeckung 52 integriert. Dies erleichtert eine Herstellung, eine Montage und erhöht eine Steifigkeit der Radlaufabdeckung 52 im Bereich der Verprägung 23. Die Radlaufabdeckung 52 ist im Bereich der Verprägung 23 im Querschnitt zumindest weitgehend geradlinig. Die Rippen 43 mögen als Einsatzteil(e) in den Luftkanal 44 eingebracht worden sein. Dazu mögen die Rippen 43 insbesondere an einem vorderen Rand des geradlinigen Bereichs 54 mit dem geradlinigen Bereichs 54 verbunden sein, bevorzugt über ein Filmscharnier (o. Abb.). Die Rippen 43 können also insbesondere an dem vorderen Rand des geradlinigen Bereichs 54 befestigt sein und mittels des Filmscharniers in den Luftkanal 44 einschwenkbar sein. Dies erleichtert eine Montage weiter. Die Rippen 43 können insbesondere als Teile eines einzigen Einsatzteils miteinander zusammenhängen.

Selbstverständlich ist die vorliegende Erfindung nicht auf die gezeigten Ausführungsbeispiele beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Personenkraftwagen
- 2: Radgehäuse
- 3: Luftkanal
- 4: Seitenwand
- 5: Verprägung
- 5a: Boden der Verprägung
- 5b: obere Seitenwand der Verprägung
- 5c: untere Seitenwand der Verprägung
- 6: Radlaufabdeckung
- 7: vorderer Rand der Verprägung
- 8: vorderer Rand der Radlaufabdeckung
- 9: Abschnitt
- 10: hinterer Rand
- 11: Personenkraftwagen
- 12: Schutzabdeckung
- 13: Zapfen
- 14: Loch
- 15: Seitenwand
- 16: Spalt
- 21: Personenkraftwagen
- 22: Radlaufabdeckung
- 23: Verprägung
- 24: Loch in der Verprägung
- 25: Zapfen
- 26: Loch außerhalb der Verprägung
- 27: Seitenwand
- 29: Strebe
- 30: innere Abdeckung
- 31: Teilbereich
- 32: Grund
- 33: Luftkanal
- 34: Bereich
- 35: Außenwand
- 38: Versteifungsstruktur
- 41: Personenkraftwagen
- 42: Radlaufabdeckung
- 43: Rippe
- 44: Luftkanal
- 45: Teilbereich
- 47: Seitenwand
- 51: Personenkraftwagen
- 52: Radlaufabdeckung
- 53: Schutzabdeckungsbereich
- 54: geradliniger Bereich
- 57: Seitenwand
- 101: Radgehäuse
- 102: Öffnung
- 103: Seitenwand
- 104: Personenkraftfahrzeug
- 105: Kunststoffbauteil
- 106: als Lufteinlassöffnung dienendes offenes Ende
- 107: als Luftauslassöffnung dienendes offenes Ende
- 108: Luftkanal
- 109: vorderer Rand der Seitenwand
- 110: Blende
- 111: hinterer Rand der Seitenwand
- R: Rad
- T: Tür

## Patentansprüche

1. Kraftfahrzeug (1; 11; 21; 41; 51), aufweisend einen von einem Radgehäuse (2) ausgehenden Luftkanal (3; 33; 44), **dadurch gekennzeichnet, dass** der Luftkanal (3; 33; 44) zwischen einer Seitenwand (4; 15; 27; 47; 57) des Kraftfahrzeugs (1; 11; 21; 41; 51) und einer die Seitenwand (4; 15; 27; 47; 57) beabstandet überdeckenden Radlaufabdeckung (6; 22; 42; 52) verläuft und die Radlaufabdeckung (6; 22; 42; 52) einen äußeren Rand des Radgehäuses (2) abschnittsweise oder vollständig abdeckt.

2. Kraftfahrzeug (1; 11; 21; 41; 51) nach Anspruch 1, wobei der Luftkanal (3; 33; 44) zumindest abschnittsweise zwischen einer nach innen gerichteten Verprägung (5; 23) der Seitenwand (4; 15; 27; 47; 57) und einer die Verprägung (5; 23) beabstandet überdeckenden Radlaufabdeckung (6; 22; 42; 52) verläuft.

3. Kraftfahrzeug (1; 11; 21; 41; 51) nach Anspruch 2, wobei die Verprägung (5; 23) sich bis hinter die Radlaufabdeckung (6; 22; 42; 52) erstreckt.

4. Kraftfahrzeug (1; 11; 21; 41; 51) nach Anspruch 3, wobei die Verprägung (5; 23) sich bis in eine Tür (T) erstreckt.

5. Kraftfahrzeug (1; 11; 21; 41; 51) nach einem der Ansprüche 2 bis 4, wobei die Verprägung (5; 23) eine entlang ihrer Längserstreckung zumindest abschnittweise geradlinige Verprägung ist.

6. Kraftfahrzeug (1; 11; 21; 41; 51) nach einem der Ansprüche 2 bis 5, wobei die Verprägung (5; 23) eine im Querschnitt wannenförmig nach innen gewölbte Verprägung ist.

7. Kraftfahrzeug (1; 11; 21; 41; 51) nach einem der Ansprüche 2 bis 6, wobei eine Höhe der Verprägung (5; 23) geringer ist als eine Höhe des Radgehäuses (2).

8. Kraftfahrzeug (21; 41; 51) nach einem der vorhergehenden Ansprüche, wobei die Radlaufabdeckung (22; 42; 52) in der dem Luftkanal (3; 33; 44) zugehörigen Bereich (23) der Seitenwand (27; 47; 57) verrastet ist.

9. Kraftfahrzeug (41; 51) nach einem der vorhergehenden Ansprüche, wobei die Radlaufabdeckung (42; 52) in den Luftkanal (44) ragende Rippen (43) aufweist.

10. Kraftfahrzeug (41; 51) nach Anspruch 9, wobei die Rippen (43) horizontal in den Luftkanal (44) ragende Rippen (43) sind

11. Kraftfahrzeug (11; 21; 41; 51) nach einem der vorhergehenden Ansprüche, wobei der dem Luftkanal (3; 33; 44) zugehörige Bereich der Seitenwand (15, 23; 27, 23; 47, 23; 57, 23) zumindest bereichsweise mittels einer Schutzabdeckung (12; 53) abgedeckt ist, welche von der Radlaufabdeckung (22; 42; 52) zumindest teilweise außenseitig beabstandet überdeckt ist.

12. Kraftfahrzeug (51) nach Anspruch 11, wobei die Schutzabdeckung als ein Schutzabdeckungsbereich (53) in die Radlaufabdeckung (52) integriert ist.

13. Kraftfahrzeug (51) nach Anspruch 12, wobei
- der Schutzabdeckungsbereich (53, 54) im Querschnitt zumindest abschnittsweise geradlinig ist,
- der Schutzabdeckungsbereich (53, 54) an einem in das Radgehäuse (2) gerichteten vorderen Rand (8) über ein Filmscharnier mit mindestens einem Einsatzteil (43) verbunden ist,
- welches mindestens eine Einsatzteil (43) um das Filmscharnier in die Radlaufabdeckung (52) zwischen dem Schutzabdeckungsbereich (53) und dem den Schutzabdeckungsbereich (53) beabstandet überdeckenden Bereich verschwenkbar ist.

14. Kraftfahrzeug (51) nach Anspruch 13, wobei das Einsatzteil (43) horizontal oder schräg horizontal verlaufende Streben, insbesondere Rippen (43), aufweist.

## Claims

1. A motor vehicle (1; 11; 21; 41; 51), having an air duct (3; 33; 44) starting from a wheel housing (2), **characterised in that** the air duct (3; 33; 44) runs between a side wall (4; 15; 27; 47; 57) of the motor vehicle (1; 11; 21; 41; 51) and a wheel housing cover (6; 22; 42; 52) which covers the side wall (4; 15; 27; 47; 57) at a distance therefrom, and the wheel housing cover (6; 22; 42; 52) covers an outer edge of the wheel housing (2) in sections or completely.

2. A motor vehicle (1; 11; 21; 41; 51) according to Claim 1, wherein the air duct (3; 33; 44) runs, at least in sections, between an inwards-directed impressed portion (5; 23) of the side wall (4; 15; 27; 47; 57) and a wheel housing cover (6; 22; 42; 52) which covers the impressed portion (5; 23) at a distance therefrom.

3. A motor vehicle (1; 11; 21; 41; 51) according to Claim 2, wherein the impressed portion (5; 23) extends behind the wheel housing cover (6; 22; 42; 52).

4. A motor vehicle (1; 11; 21; 41; 51) according to Claim 3, wherein the impressed portion (5; 23) extends into a door (T).

5. A motor vehicle (1; 11; 21; 41; 51) according to one of Claims 2 to 4, wherein the impressed portion (5; 23) is an impressed portion which is rectilinear at least in sections along its longitudinal extent.

6. A motor vehicle (1; 11; 21; 41; 51) according to one of Claims 2 to 5, wherein the impressed portion (5; 23) is an impressed portion which is curved inwards in a trough-shape in cross-section.

7. A motor vehicle (1; 11; 21; 41; 51) according to one of Claims 2 to 6, wherein a height of the impressed portion (5; 23) is less than a height of the wheel housing (2).

8. A motor vehicle (21; 41; 51) according to one of the preceding claims, wherein the wheel housing cover (22; 42; 52) is latched in the region (23) of the side wall (27; 47; 57) associated with the air duct (3; 33; 44).

9. A motor vehicle (41; 51) according to one of the preceding claims, wherein the wheel housing cover (42; 52) has ribs (43) protruding into the air duct (44).

10. A motor vehicle (41; 51) according to Claim 9, wherein the ribs (43) are ribs (43) which protrude horizontally into the air duct (44).

11. A motor vehicle (11; 21; 41; 51) according to one of the preceding claims, wherein the region of the side wall (15, 23; 27, 23; 47, 23; 57, 23) associated with the air duct (3; 33; 44) is covered at least in regions by means of a protective cover (12; 53) which is covered by the wheel housing cover (22; 42; 52) at least partially on the outside at a distance therefrom.

12. A motor vehicle (51) according to Claim 11, wherein the protective cover is integrated in the wheel housing cover (52) as a protective cover region (53).

13. A motor vehicle (51) according to Claim 12, wherein
- the protective cover region (53, 54) is rectilinear at least in sections in cross-section,
- the protective cover region (53, 54), on a front edge (8) directed into the wheel housing (2), is connected via an integral hinge to at least one insert part (43),
- which at least one insert part (43) is pivotable about the integral hinge into the wheel housing cover (52) between the protective cover region (53) and the region which covers the protective cover region (53) at a distance therefrom.

14. A motor vehicle (51) according to Claim 13, wherein the insert part (43) has horizontally or obliquely horizontally running struts, especially ribs (43).

## Revendications

1. Véhicule automobile (1 ; 11; 21 ; 41 ; 51) ayant un canal d'air (3 ; 33 ; 44) partant d'un passage de roue (2),
**caractérisé en ce que**
le canal d'air (3 ; 33 ; 44) passe entre la paroi latérale (4, 15 ; 27 ; 47 ; 57) du véhicule (1 ; 11 ; 21 ; 41 ; 51) et un habillage de passage de roue (6 ; 22 ; 42 ; 52) couvrant avec écartement, la paroi latérale (4, 15 ; 27 ; 47 ; 57) l'habillage de passage de roue (6 ; 22 ; 42 ; 52) couvrant partiellement ou complètement le bord extérieur du passage de roue (2).

2. Véhicule automobile (1 ; 11 ; 21 ; 41 ; 51) selon la revendication 1,
**caractérisé en ce que**
le canal d'air (3 ; 33 ; 44) passe au moins par segments entre un enfoncement (5 ; 23) orienté vers l'intérieur de la paroi latérale (4, 15 ; 27 ; 47 ; 57) et l'habillage de passage de roue (6 ; 22 ; 42 ; 52) couvrant de façon écartée, l'enfoncement (5 ; 23).

3. Véhicule automobile (1 ; 11 ; 21 ; 41 ; 51) selon la revendication 2,
**caractérisé en ce que**
l'enfoncement (5 ; 23) s'étend jusque derrière l'habillage de passage de roue (6 ; 22 ; 42 ; 52).

4. Véhicule automobile (1 ; 11 ; 21 ; 41 ; 51) selon la revendication 3,
**caractérisé en ce que**
l'enfoncement (5 ; 23) s'étend jusqu'à la portière (T).

5. Véhicule automobile (1 ; 11 ; 21 ; 41 ; 51) selon l'une des revendications 2 à 4,
**caractérisé en ce que**
l'enfoncement (5 ; 23) est, selon son extension longitudinale, un enfoncement au moins rectiligne par segments.

6. Véhicule automobile (1 ; 11 ; 21 ; 41 ; 51) selon l'une des revendications 2 à 5,
**caractérisé en ce que**
l'enfoncement (5 ; 23) est un enfoncement bombé vers l'intérieur, dont la section a une forme de cuvette.

7. Véhicule automobile (1 ; 11 ; 21 ; 41 ; 51) selon l'une des revendications 2 à 6,
**caractérisé en ce que**
la hauteur de l'enfoncement (5 ; 23) est inférieure à la hauteur du passage de roue (2).

8. Véhicule automobile (21 ; 41 ; 51) selon l'une des revendications précédente,
**caractérisé en ce que**
l'habillage de passage de roue (22 ; 42 ; 52) est accroché dans la zone (23) de la paroi latérale (27 ; 47 ; 57) faisant partie du canal d'air (3 ; 33 ; 44).

9. Véhicule automobile (41 ; 51) selon l'une des revendications précédentes,
**caractérisé en ce que**
l'habillage de passage de roue (42 ; 52) a des nervures (43) venant en saillie dans le canal d'air (44).

10. Véhicule automobile (41 ; 51) selon la revendication 9,
**caractérisé en ce que**
les nervures (43) sont des nervures (43) venant horizontalement en saillie dans le canal d'air (44).

11. Véhicule automobile (11 ; 21 ; 41 ; 51) selon l'une des revendications précédentes,
**caractérisé en ce que**
la zone de la paroi latérale (15 ; 23 ; 27 ; 23 ; 47 ; 23 ; 57 ; 23) qui fait partie du canal d'air (3 ; 33 ; 43) est couverte au moins partiellement par un revêtement de protection (12 ; 53) couvert au moins partiellement côté extérieur par l'habillage de passage de roue (22 ; 42 ; 52).

12. Véhicule automobile (51) selon la revendication 11,
**caractérisé en ce que**
le revêtement de protection est intégré dans l'habillage de passage de roue (52) sous la forme d'une zone de revêtement de protection (53).

13. Véhicule automobile (51) selon la revendication 12,
**caractérisé en ce que**
- la zone de revêtement de protection (53 ; 54) a une section au moins partiellement droite,
- la zone de revêtement de protection (53 ; 54) est reliée au niveau du bord avant (8) orienté dans le passage de roue (2), par une charnière-film ayant au moins une pièce d'insertion (43),
- et au moins cette pièce d'insertion (43) peut être pivotée autour de la charnière-film dans l'habillage de passage de roue (52) entre la zone de couverture (53) et la zone de couverture écartée de la zone de protection (53).

14. Véhicule automobile (51) selon la revendication 13,
**caractérisé en ce que**
l'insert (43) présente des entretoises orientées horizontalement ou inclinées, notamment des nervures (43).
